Europäisches Patentamt

European Patent Office

Office européen des brevets

(19)

(11) Publication number: **0 458 724 A1**

## EUROPEAN PATENT APPLICATION

(12)

(21) Application number: **91500047.5**

(22) Date of filing: **21.05.91**

(51) Int. Cl.⁵: **F24F 5/00**

(30) Priority: **25.05.90 ES 9001466**

(43) Date of publication of application:
**27.11.91 Bulletin 91/48**

(84) Designated Contracting States:
**AT BE CH DE DK FR GB GR IT LI LU NL SE**

(71) Applicant: **Palacios Celaya, Inaki**
**c/Heros no. 9**
**E-48009 Bilbao (Vizcaya) (ES)**
Applicant: **Far Mayol, Juan**
**c/Ikaro no. 10-2o**
**E-48990 Algorta (Vizcaya) (ES)**

(72) Inventor: **Palacios Celaya, Inaki**
**c/Heros no. 9**
**E-48009 Bilbao (Vizcaya) (ES)**
Inventor: **Far Mayol, Juan**
**c/Ikaro no. 10-2o**
**E-48990 Algorta (Vizcaya) (ES)**

(74) Representative: **Gomez-Acebo y Pombo, José**
**Miguel**
**c/o CLARKE, MODET & Co. Paseo de la**
**Castellana 164**
**E-28046 Madrid (ES)**

(54) **Improvements in the construction of cooling towers for air conditioning.**

(57) Improvements in the construction of cooling towers for air conditioning, in which the accumulated water in the bottom (6) of the tower (1) is driven by a pump (8) towards the elements to be cooled (9), where the water heats up. It then passes to at least one radiator (10) fitted in the upper part of the tower (11), this radiator being cooled by a fan (13) which also cools the water as it flows down when an irrigator element (11) is connected to the outlet of the radiator (11). Via this, the water falls on to at least one perforated tray (12) fitted inside the casing of the tower (1), through which the water passes to the lower part (6) to complete the circuit.

EP 0 458 724 A1

The subject of this invention is certain improvements made in the construction of cooling towers for air conditioning. Such towers are built with a housing or casing, at least one end of which is closed; their interiors contain support units for the cooling elements that the water passes down through, driven by an external pump that supplies the water to the air conditioning unit or apparatus.

In existing cooling towers, the manner in which they are built and the elements that they contain cause an enormous consumption of water due to evaporation losses. This implies additional costs for the user, since an extra water tank has to be used in case there is a cut-off in the mains water supply.

With the tower that is the subject of this invention, these difficulties are rectified since the tower's constructional and operating characteristics mean that water consumption is minimal due to the fact that the evaporation is extremely low.

According to the invention, the cooling tower for air conditioning is characterized by the accumulated water in the bottom part of the tower being driven by a pump towards the elements to be cooled, where the water heats up. It then passes to at least one radiator fitted in the upper part of the tower, which is cooled by a fan so that the water in turn is cooled as it flows down. This down-flow is produced by means of an irrigator element connected to the radiator outlet.

The irrigation element is located inside the tower, the water falling from the irrigator element on to at least one perforated tray fitted inside the tower. Via this, the water passes to the bottom part of the tower to complete the circuit.

At least one air-cooled radiator is fitted in the circuit between the elements to be cooled and the radiator.

Naturally, the tower's own casing has the supports for coupling and securing into place all the above-mentioned elements. Also, in the lower part of the casing there is an opening through which is connected the end of the pipe that drives the air to the elements to be cooled and to the upper part of the tower.

Similarly, in the bottom part of the tower there is a connection for introducing water into it whenever necessary, in order to maintain the given minimum required level. This level can also be read off from a water height gauge.

For the purpose of more easily understanding not just the design but also the proper use of the cooling tower that is the subject of this invention, the comments below refer to a practical example that has been carried out. The construction is intended purely to provide an example and is in no way considered as placing any restriction on the tower. The whole arrangement is shown in the attached diagram, which shows a schematic view of the cooling tower used for one air conditioning element or apparatus.

The cooling tower 1, used for one air conditioning apparatus, consists of a casing 2, preferably cylindrical, covered at both ends by a spherical cap 3.

The casing is supported by legs 4.

The inside of the lower part of the casing contains water to a certain height, the level being controlled by means of an external gauge 5.

The base 6 is connected via an outlet to a pipe 7 through which the water exits by means of the action of a pump 8, which drives the water and causes it to pass through the elements to be cooled 9. Here the water heats up and is then cooled as it passes through a radiator 10 fitted in the entrance to the tower in the upper part of the casing.

The outlet from the radiator 10 is connected to an irrigating element 11, through which the water falls on to at least one perforated tray 12, the water being cooled by a fan 13 which also cools the radiator 10.

Between the elements to be cooled 9 and the radiator 10, a radiator 14 is fitted to the circuit, cooled by means of a fan 15.

The lower part of the casing is fitted with a inlet for filling with water so that the evaporated water lost as the cooling tower is running can be replaced.

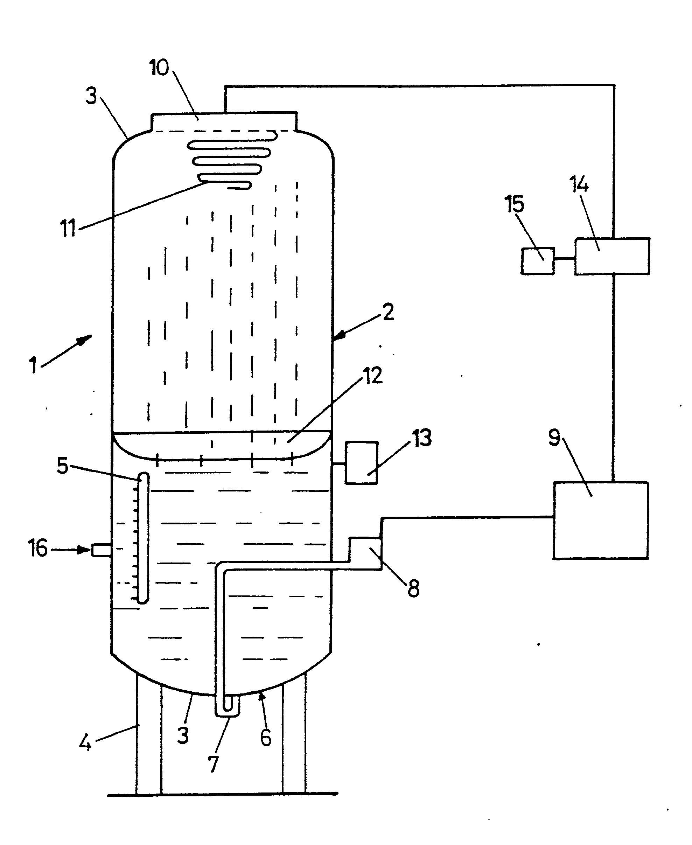

## Claims

1.- Improvements in the construction of cooling towers for air conditioning, characterized by the accumulated water in the bottom of the tower being driven by a pump towards the elements to be cooled, where the water heats up. It then passes to at least one radiator fitted in the upper part of the tower, where it is cooled by a fan which at the same time cools the water as it flows down. This down-flow is produced by means of an irrigator element connected to the radiator outlet. The water falls on to at least one perforated tray fitted inside the tower. Via this, the water passes to the bottom of the tower to complete the circuit.

2.- Improvements in accordance with patent claim 1, characterized by fitting at least one other air-cooled radiator in the circuit between the elements to be cooled and the radiator.

EP 0 458 724 A1

European Patent
Office

## EUROPEAN SEARCH REPORT

Application Number

EP 91 50 0047

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | SOVIET INVENTIONS ILLUSTRATED Section Mechanical, week 8834, abstract no. 240956 Q/74, 5 October 1988, Derwent Publications Ltd., London, GB; & SU - A - 1370380 (POPOV) 30.01.1988 | 1 | F 24 F 5/00 |
| A | SOVIET INVENTIONS ILLUSTRATED Section Mechanical, week 9012, abstract no. 089439 Q/74,Q/78, 2 May 1990, Derwent Publications Ltd., London, GB; & SU - A - 1506235 (MOSC TEXTILE INST) 07.09.1989 | 1 | |

TECHNICAL FIELDS
SEARCHED (Int. Cl.5)

F 24 F
F 28 C

The present search report has been drawn up for all claims

| Place of search | Date of completion of the search | Examiner |
|---|---|---|
| BERLIN | 27-08-1991 | PIEPER C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

5